(19) Europäisches Patentamt
European Patent Office
Office européen des brevets

(11) EP 2 706 752 A1

(12) EUROPEAN PATENT APPLICATION

(43) Date of publication:
12.03.2014 Bulletin 2014/11

(51) Int Cl.:
H04N 17/00 (2006.01)
H04N 21/6377 (2011.01)
H04N 21/442 (2011.01)
H04N 21/845 (2011.01)

(21) Application number: 12306065.9

(22) Date of filing: 06.09.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Alcatel Lucent
75007 Paris (FR)

(72) Inventors:
• de Vriendt, Johan
9051 Afsnee (BE)
• de Vleeschauwer, Danny
9940 Evergem (BE)

(74) Representative: ALU Antw Patent Attorneys
Intellectual Property and Standards
Copernicuslaan 50
2018 Antwerp (BE)

(54) **Method to determine the global quality of a video stream delivered using adaptive streaming**

(57) A method for assessing the quality ($\mu_{seq}$) of a video stream provided from a server to a client in a client/centric delivery architecture, comprises the steps of monitoring successive requests for successive video portions from the client to the server, deriving from the successive requested bitrates extracted from the successive monitored requests a set of successive chunk quality values ($\mu_k$) associated to said successive video portions during a predetermined timing interval (1,...,K), and to further calculate from said successive chunk quality values ($\mu_k$) during said timing interval (1,...,K) a final video quality score ($\mu_{seq}$)value.

Fig. 1c

**Description**

The present invention relates to a method to determine the quality of a video stream.

Some known quality assessment techniques are full reference methods, implying that, at the receiver, besides the decoded received video signal also the original source or reference video signal is needed to assess the quality degradation in the decoded received video signal. This is however not feasible on real deployed networks and systems and hence, such methods are restricted to laboratory tests.

Other techniques, referred to as reduced reference methods, make use of a stream of features extracted from the original source or reference video signal, and assess the quality degradation of the decoded received video signal by comparing the stream of features with the equivalent stream of features extracted from the decoded received video signal. The reliability of these reduced reference methods depends on the amount of features that are extracted, i.e., the larger (in bit rate) the stream of features is the better the reliability. In the current state of the art the bit rate associated with the stream of features still needs to be considerable compared to the bit rate of the video signal itself such that these reduced reference methods suffer from the same drawbacks as the full reference methods.

Other existing methods, referred to as no-reference methods, only rely on the received information (either the stream of packets or the decoded video signal) to assess the degradation caused by encoding and transmission, and hence such methods do not need to know the original signal.

A further classification of no-reference methods depends on the type of information they use: they can be pixel based or bitstream based.

For the pixel based methods, the decoded sequence is required. These methods look for known artifacts associated with the video encoding and transmission process. Often the encoding process (e.g., compliant with the H. 264 standard) introduces blocking artifacts (false borders are introduced at the borders of the blocks that are used as fundamental coding units) in the received and decoded video blocks. These methods are however quite complex.

The bitstream based methods make use of information of the bitstream e.g. average bitrate, type of packets lost (e.g. P/I/B frames)) and/or network parameters such as packet loss, latency ... In addition information about the sequence (type of sequence) can be considered.

Despite the fact that thus nowadays a multitude of methods for assessing the quality of a video stream are available, most of these existing methods are applicable in server-centric video delivery and are not suited for client-centric video delivery. In server-centric video delivery the server decides in which quality (i.e., at which bit rate) the video requested by the client is streamed to that client. In client-centric video delivery of which HAS, which is the abbreviation of HTTP adaptive streaming, delivery, is a prominent example, the client decides the quality (and hence the bit rate) of the requested video on an interval by interval basis.

In HTTP adaptive streaming delivery a client/server approach is used wherein at the server the video is segmented in short intervals, also denoted chunks, of length between 2sec and 10sec. Each of these intervals is encoded in a multiple of versions each with their own associated nominal bit rate. Each chunk can be decoded independently of other chunks. The client monitors the available throughput over the network and based on this then selects the appropriate bitrate version for the chunk it needs to download next. This selection is usually based on a so-called rate decision algorithm which tries to match the selected video bit rate to the (average) throughput between client and server. Since it is difficult to obtain an exact match between the video bit rate and the throughput a play-out buffer is still needed in the client, for guaranteeing that the video play-out never stalls (as the buffer ideally never empties). In HAS the chunks are transported over HTTP (hyper text transport protocol) which runs over TCP (transport control protocol).

The quality versions that the client can choose from on a chunk by chunk basis are described in a so-called manifest file in the server. This manifest file is downloaded by the client at the beginning of a video session, and it can be updated later, e.g., for live video, by a request from the client to the server.

It is thus an object of embodiments of the present invention to propose a method which is especially suited to accurately assess the quality of a video delivered from a server to a client using client-centric video delivery with one particular embodiment HTTP adaptive streaming.

According to embodiments of the present invention this object is achieved by the provision of a method for assessing the quality of a video stream provided from a server to a client in a client/centric delivery architecture, said method comprising the steps of monitoring successive requests for successive video portions from the client to the server, deriving from the successive requested bitrates extracted from the successive monitored requests a set of successive chunk quality values associated to said successive video portions during a predetermined timing interval, and to further calculate from said successive chunk quality values during said timing interval a final video quality score value.

In this way a simple, yet effective method for assessing the quality of a video stream is provided, based on individual successive chunk quality values.

It is to be remarked that the MOS model introduced here can operate with other client-centric approaches different from HTTP adaptive streaming, as long as the messages indicating which quality version the client requests can be intercepted.

In an embodiment the calculation of said final video quality score value further depends on at least one audience related parameter.

This enables to further take into account additional parameters which add to the accuracy of the obtained result.

In a variant embodiment said at least one audience-related parameter is tuned such that the model used for calculating said final video quality score value maximally correlates with the outcome of subjective experiments earlier obtained during quality assessment measurements of a set of videos by a live audience.

This further adds to increasing the correlation with subjective scores given by human video watchers.

In another embodiment said at least one audience-related parameter is tuned by an operator when performing said method.

In this case a further fine tuning of the parameters may be based on customers' feedback, thus also increasing the correlation with subjective scores given by a public.

In a variant method said calculation involves a weighted averaging of said successive chunk quality values.

Respective weights can be attributed to said successive chunk quality values with the respective weights taking into account at least one of said at least one audience-related parameter earlier obtained during quality assessment measurements of a video with a live audience.

This provides a simple, yet very accurate method.

In another variant said calculation involves calculating a p-percentile of said successive chunk quality values.

This provides yet another simple alternative.

In an embodiment the method further comprises the steps of providing a set of associated quality profiles to a set of possible requested bitrates for said video stream, to said server, and to incorporate said set of associated quality profiles within a manifest file that describes the formats the client can choose from for said video stream, such that said set of successive chunk quality values is selected from said set of associated quality profiles.

This allows to further reduce the complexity of the real-time calculations as the associated quality profiles can be calculated off-line and provided within the manifest file, such that the chunk quality values can just be selected or retrieved from these manifest files.

Embodiments of the present invention relate as well to a computer program comprising software to perform the steps of the method in accordance to any of the claims 1 to 8, and to an apparatus comprising means for carrying out the method in accordance to any of the claims 1 to 8.

The above and other objects and features of the invention will become more apparent and the invention itself will be best understood by referring to the following description of an embodiment taken in conjunction with the accompanying drawings wherein:

Figs. 1a-c all show a situation of a HTTP adaptive streaming video transmission between a server and a client, with a high level schematics of three embodiments of a video quality determination device,

Fig. 2 illustrates another embodiment of the method for the MOS calculation,

Fig. 3 illustrates a still variant method

Embodiments of the present invention aim to find a mean opinion score, hereafter abbreviated by MOS, being a number indicating the quality associated with a video stream. Objective video quality models assess the quality of a video, i.e., they predict the Mean Opinion Score, abbreviated by MOS; an audience would give when appraising the video. The MOS associated with a video is the average (i.e., mean) of all individual scores that the members of the audience give. Subjective tests (where audiences appraise videos) are cumbersome and time-consuming. Therefore objective video quality models, which calculate a prediction for the MOS, are developed. They are faster and easier to use than subjective tests, but in order to be valuable their predictions should correlate well with these subjective tests.

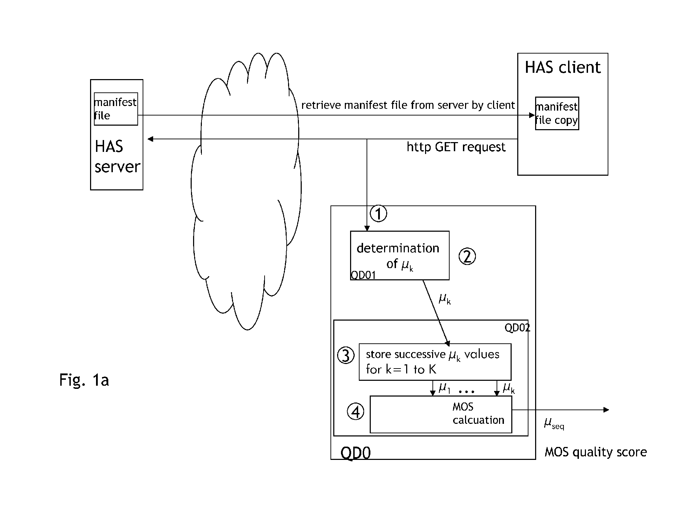

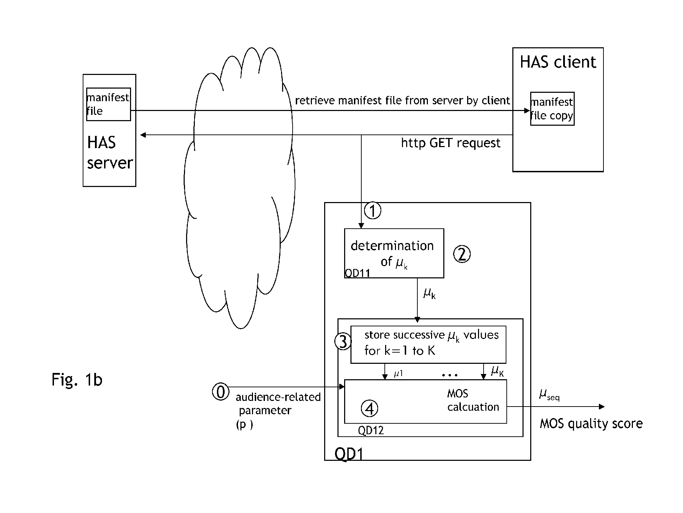

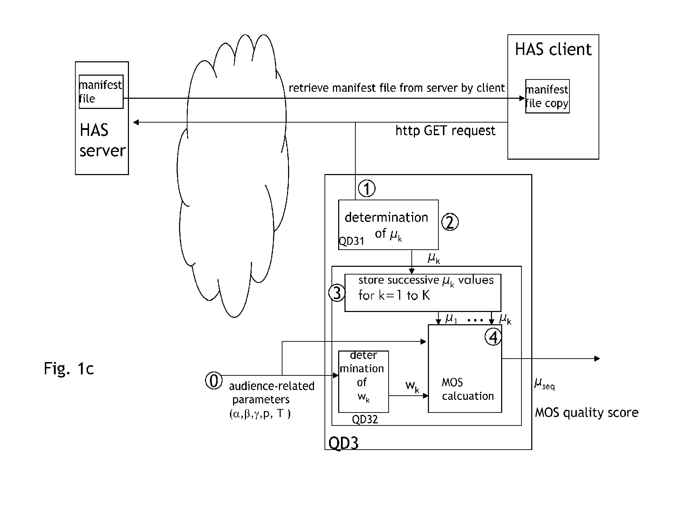

Embodiments of the invention aim to find a MOS value for a video stream which is itself delivered using a client-centric approach. With client-centric approach a client/server architecture is meant, whereby the client is further adapted to take some decisions related to the version of the video which is requested by this client and subsequently downloaded. An example of such a client-centric approach is HTTP adaptive streaming, hereafter abbreviated as HAS, and RTSP speed header as is for instance described in US patent application 20090089445. Embodiments of the method used for calculating such a MOS score are of the bitstream-based model type, as for HAS video delivery and other client-centric video delivery methods the client behavior can be almost completely characterized by inspecting network packets, in particular, the messages the client issues in which it indicates which bitrate versions of the chunks it desires to receive. In HAS these messages are HTTP GET messages. Such a HTTP GET message concerns a message transmitted from the client towards the server and already comprises information with respect to the requested bitrate for a requested chunk at a particular instance in time. In the assumption that the HAS client receiver functions properly, meaning that the play-out buffer at the receiver is sufficiently large and operates such that there are no frame freezes due to the play-out buffer under-running, an inspection of the evolution of these HTTP GET messages transmitted by the client over time, provides sufficient input information for the method. In Fig. 1a the method to assess the MOS of a video is performed by means of a separate Video Quality determination device QD0. It may be part of the client, of the server, or reside somewhere in the network, as is the situation depicted in Fig. 1. In other embodiments it can be distributed over several physical processors too.

During HTTP adaptive streaming the client is continuously transmitting HTTP GET requests to the server. These are thus monitored by QD0, as schematically indicated in step 1, showing that these HTTP GET messages are also transmitted or intercepted by QD0.

Within QD0, a module QD01 is adapted to intercept and receive these HTTP GET request messages, which indicate which chunks the client requests, to calculate for each requested and subsequently delivered video chunk k an associated chunk quality value $\mu_k$, based on the individual HTTP GET request messages. A method for calculating such an individual chunk quality value $\mu_k$ for chunk k can rely on well known models that associate a MOS of a chunk to the nominal bit rate of that chunk. An example of such a model is described in "User-Oriented QoS Analysis in MPEG-2 Video Delivery", by O. Verscheure et. al., in Journal of Real-Time Imaging, October 1999, vol.5, no 5, pp. 305-314, and can be expressed by the following formula :

$$\mu_k = Q_o + \chi_Q \cdot (R_k/\chi_R)^{-1/\xi} \qquad\qquad (1)$$

where $Q_o$, $\chi_Q$, $\chi_R$, and $\xi$ are parameters that depend on the complexity of the video and the screen size on which the video is watched and $R_k$ is the bitrate in which the client requested chunk k. The value of the requested bit $R_k$ is embedded in the HTTP GET message.

Rough values for these parameters $Q_o$, $\chi_Q$, $\chi_R$, and $\xi$ are given in the referenced paper. In the context of this application these are assumed to be known, as being comprised in the state of the art.

For subsequent values of k, with values for the total number K being at least 10 and which can go up to even 500 or more, of requested video chunks, a set of chunk quality values $\mu_k$ will thus be obtained. In the embodiment depicted in Fig. 1a a dedicated module QD01 for this calculation is provided, but in other embodiments such a separate module may not be present as in these other embodiments the process of how to associate a MOS value $\mu_k$ per chunk described above may reside outside QD0, or be part of one single processor implementing the whole functionality of QD0.

In a next step, these subsequent $\mu_k$ values will then be further analyzed and combined according to a predetermined function. In the embodiment of Fig. 1a, a second module QD02 is adapted to perform this, but again, in other embodiments all calculations can as well be performed by means of one processor.

In Fig. 1a QD02 further comprises a module for storing successive values of $\mu_k$ calculated over a timing period of K successive delivered chunks. This storage is performed in step 3. In step 4 the actual MOS value calculation over the timing interval of K delivered chunks is performed. In a very simple embodiment the MOS quality score $\mu_{seq}$ is calculated as the average value of the K chunk quality values. In an alternative embodiment $\mu_{seq}$ is obtained by determination of the median of these K values. In another embodiment, depicted in Fig. 1b, an additional parameter p is used as an additional input, e.g. p may have the value of 20% indicating that out of the K chunk quality values, the p-th percentile value is to be selected for provision as MOS quality score over the interval comprising the K delivered chunks. This input parameter value may have a fixed value, or, alternatively, can be tuned based on audience feedback. This audience feedback can e.g. be based on complaints received by an operator.

In another embodiment $\mu_{seq}$ will be obtained as a result of a function G($\mu_k$, parameters) which depends on $\mu_k$ and possibly one or more, audience-related parameters, obtained over the video sequence comprising K chunks. A typical value for K can be 20, but it can also be much larger e.g. 500 for a whole video of 50 minutes such that the whole video is covered based on the values of the individually determined $\mu_k$ values for the K chunks that make up the most recent part of the video sequence. To have the highest possible reliability (i.e., to have a MOS model that correlates well with subjective appraisals) the one or more input parameters of this function can be predetermined based on earlier determined audience experiments obtained during quality assessment measurements of a video with a live audience.

In an embodiment this predetermined function G($\mu_k$,parameters) involves a first attribution of K respective weights $W_k$ to the K respective quality values $\mu_k$, for the K successive chunks. The weights themselves again can be tuned based upon the audience parameters. In this embodiment the predetermined function further combines the weighted values into one final quality metric, also taking into account these or other parameters which were also obtained during the set of experiments with a live audience.

This predetermined function G ($\mu_k$, parameters) can e.g. be a weighted averaging function or a function calculating a p-percentile of the individual weighted $\mu_k$ values, whereby p is again tuned such as to maximize correlation with live audiences appraising video quality. Both variants will be further discussed in the next paragraphs.

A method to associate a MOS value to the sequence may involve averaging the MOS values associated with individual chunks. We extend this to the following formula (2) :

$$\mu_{seq} = \alpha \cdot \mu_{ave} - \beta \cdot \sigma - \gamma \cdot \phi \tag{2}$$

with $\alpha \geq 0$, $\beta \geq 0$, $\gamma \geq 0$
where

$$\mu_{ave} = \frac{\sum_{k=1}^{K} w_k \cdot \mu_k}{\sum_{k=1}^{K} w_k}$$

$$\sigma = \sqrt{\frac{\sum_{k=1}^{K} w_k \cdot \left(\mu_k - \mu_{ave}\right)^2}{\sum_{k=1}^{K} w_k}}$$

$$\phi = \frac{\sum_{k=1}^{K-1} w_k \cdot 1_{\{\mu_k \neq \mu_{k+1}\}}}{\sum_{k=1}^{K-1} w_k} \quad \text{with} \quad 1_{\{A\}} = \begin{cases} 1 & \text{if } A \text{ is true} \\ 0 & \text{otherwise} \end{cases}$$

Here $w_k$ are the individual weights associated to the respective $\mu_k$ values. They determine the shape of the recency window. The recency window determines how many chunks requested in the past are weighted in the global appraisal of the video. A possibility for selection these weights can be that they are all the same, e,g, $w_k$=1 for k=1, ...*K*. alternatively the weights can change in an exponential way, e.g.

$$w_k = \exp(-(k-1)/T) \text{ for } k = 1, \ldots K, \tag{3}$$

where T indicates the effective width of the recency window.

In the above mentioned formula (2) for $\mu_{seq}$, which corresponds to the total video quality score, denoted $\mu_{seq}$ or MOS quality score in Fig. 1,
$\mu_{ave}$ is the average of the quality profiles $\mu_k$,
$\sigma$ is its standard deviation and
$\phi$ is the frequency of quality changes, all measured and weighted over the recency window.

Alternative ways to define $\phi$ can be considered, e.g., the height of the quality step can be taken into account.

The parameters $\alpha$, $\beta$, $\gamma$ and *T* (in case the weights are calculated in accordance with formula (3) ) can be set to predetermined values (e.g., to $\alpha$=1, $\beta$=0.5, $\gamma$=0 and T=30sec). Alternatively they may be determined by optimizing the typical performance metrics for MOS models, i.e., RMSE (Root Mean Square Error), SROCC (Spearman Rank Order Correlation Coefficient), PCC (Pearson Correlation Coefficient) or OR (Outlier Ratio) based on a ground truth obtained in a whole range of experiments. These experiments leading to the ground truth are usually performed off line with a large audience, and the outcome of these experiments are used to tune the parameters (e.g., $\alpha$, $\beta$, $\gamma$ and T) such that the fit between the quality perception of the live audience and the MOS score $\mu_{seq}$ is maximized. These experiments are thus performed off line, before the method actually starts, and the audience-related parameters $\alpha$, $\beta$, $\gamma$ and T can thus be considered as input parameters for the model. This is schematically denoted in Figs. 1b-c where one or more of these audience-related parameters of function G($\mu_k$, parameters) are available from an initializing step 0. In the embodiment depicted in Fig. 1c, some of these offline determined audience-related parameters (e.g. T in case formula (2) is used for the weights) are input for the determination of the weights $w_k$; Other audience-related parameters (such as $\alpha$, $\beta$, $\gamma$) are then used in the final calculation of $\mu_{seq}$.

It may be remarked that in other embodiments the audience-related parameters may have initially chosen values, which can be tuned afterwards, e.g. by an operator or any person using the method, based on feedback from customers to which the video files are transmitted upon their requests. This customer feedback will then result in the tuning of one or more audience-related parameters.

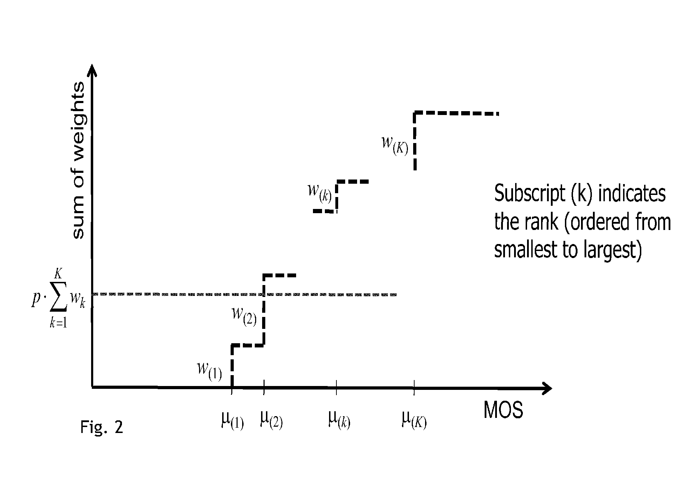

Another method to associate a MOS value $\mu_{seq}$ for the sequence from K consecutive $\mu_k$ values associated with individual chunks is referred to as pooling. It is an extension of the p-percentile parameter introduced earlier and based on the premise that users are most annoyed by, i.e., their attention is drawn most to, the worst parts in the global video sequence. Therefore, to obtain the MOS value for the global video sequence, the *p*-percentile (with *p* typically between 5% and 20%) of the individual values (associated with parts of the video) is calculated. In our context this translates to calculating the p-percentile of the K individual MOS values. This is illustrated in Figure 2. First the k $\mu_k$ values, bound together with their associated weights (which can be determined in a same way as for the averaging model previously described) are ordered. The index (k) indicates the k-th smallest $\mu_k$ value. A piece-wise constant function is constructed where at each $\mu_{(k)}$ value the function steps up an amount $w_{(k)}$. Finally it is determined at which value the fraction p of the total sum of weights is reached. The MOS value is than calculated as the average of the MOS values below the p-percentile.

Note that the median is a special case of a percentile. The special case where $\mu_{seq}$ is defined as the median of the $\mu_k$ values is an example of a function which solely depends on the $\mu_k$ values, as e.g. shown in Fig. 1a.

Instead of a step function as used in Fig. 2, also another function could be used, e.g., the complementary error function (erfc(.)), which would model that the frames within a chunk have a variable quality as well.

Again the parameters of this model, i.e., *p* and T (if used the weights are defined as in (3)), can be either chosen initially by an operator, or have a default value (e.g., P=10% and T=30sec) or can be determined by optimizing the RMSE, SROCC, PCC or OR based on a ground truth obtained in a whole range of experiments.

A third method also ranks the $\mu_k$ values, but rather than selecting one percentile, it weights the $\mu_k$ values as a function of the p-percentile with an additional weight F(p). Notice that these additional weights are different from and come on top of the weights $w_k$ associated with the chunks of the recency window. The function F(p) is chosen such that small percentiles (lower quality value) have more impact on the final MOS value. This function is again determined by optimizing the RMSE, SROCC, PCC or OR.

An example of F(p) is where F(p)=AW1 for p<p0 and F(p)=AW2 for p>=p0, where AW1 >AW2 . Alternatively the Dirac function $\delta(p-p_0)$ can be used, in which the $\mu_{seq}$ is the $p_0$-percentile of the $\mu_k$ values.

The three models discussed in the previous paragraph thus make use of a few audience-related parameters that can either have some predetermined initial values, as given in the examples in a previous paragraph. Alternatively they can be determined based on ground truth e.g. by live experiments on live audience. This ground truth needs to be obtained in experiments with an audience of users.

These experiments consist of choosing a number *L* of quality levels (preferable equidistantly on the MOS scale). Refer to $\lambda_l$ as the *l*-th quality level. In order to determine the parameters of the function G ($\mu_k$, parameters) first a set of videos is constructed, each video associated with a known quality profile ($\mu_1$, $\mu_2$, ...,$\mu_k$, ...,$\mu_k$). The set of videos (i.e., the set of quality profiles) needs to be carefully selected: the set needs to encompass all possible quality profiles that are expected to occur on the network. In principle each value $\mu_k$ can be chosen independently from the set ($\lambda_1$, $\lambda_2$, ..., $\lambda_l$, ..., $\lambda_L$). This would lead to $L^K$ possible profiles. This set is too large to be tested. Therefore a number of unrealistic profiles (e.g., the ones that are randomly fluctuating) need to be pruned from this set. One possible way to collect a realistic set of quality profiles is to inspect log files of CDN nodes or using a client plug-in that collects the requested quality version for each chunk on the fly and sends this collected data to some monitoring site in the network.

Such a set of quality profiles needs to be constructed for a few test sequences of various complexity.

The fitting parameters $\alpha$, $\beta$, $\gamma$ and *T*, *p* are chosen to maximize the correlation of the output of the model, being the final obtained quality metric with the perception of quality from the live audience.

The three described models are based on combining the quality values of these individual chunks to derive the MOS value for the sequence. The proposed models are easy to compute, accurate, easier to train as only a few parameters need to be trained, and part of the dependencies (e.g. on scene complexity, bitrate parameters etc....) are implicitly covered by making use of the MOS values of the individual chunks. Moreover they are independent of the TCP flavor (Reno, Vegas, Cubic, Fluid,...) used, independent on RDA (Rate Decision Algorithm) of the HAS client, not explicitly dependent on network parameters (e.g. latency, packet loss,...) of the medium and making use of easy to access information (HTTP GET request messages to know the chunks requested by the client).

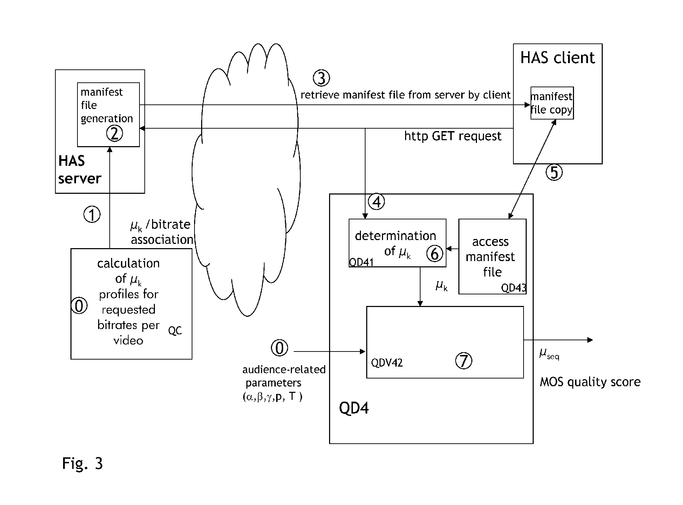

In an alternative embodiment the calculation of the respective chunk quality values $\mu_k$ as a function of the requested bandwidth , as e.g. being announced in the HTTP GET request messages, for the video chunks which are to be viewed by the client may be performed beforehand in a separate module. This is shown in fig. 3, where this separate module is denoted QC. It may be part of the HAS server, or also part of the quality determination module QD4, or even of the HAS client. The values of all possible chunk quality values for each possible client device can be calculated with a process similar to the aforementioned method in an initialization step 0, which can be performed during the generation of the video. This information is then provided to the module in the HAS server which takes care of the generation of the manifest file for this specific requested video. The provision is denoted by the arrow from QC to this manifest file module in a step 1. The association between requested bitrate and associated chunk quality value $\mu_k$ is then further inserted within the manifest file in step 2. This adapted manifest file will be provided to the HAS Client in step 3, which will copy the manifest file in a client memory. Step 4 is similar to step 1 of Figs. 1a-c, and thus involves a monitoring of the successive HTTP GET request messages within a timing window of K chunks. The module QD41 is adapted to perform this monitoring, and to determine the successive $\mu_k$, values from the HTTP GET messages. As the association between the requested bitrate and $\mu_k$ values is already known from the adapted manifest file, this manifest file will be accessed in step 5 . In the embodiment depicted in Fig. 3 the manifest file is captured from the client. In an alternative embodiment (not depicted), the manifest file may also be captured by the quality determination device during the exchange of the manifest file between server and client. The information of the $\mu_k$ value associated to a requested bitrate, will then be provided to QD41 during the determination of $\mu_k$ . In Fig. 3 a separate memory module QD43 is shown for storage of a copy of the accessed manifest file. In other embodiments however direct access from QD41 to the client for accessing the manifest file for obtaining the associated $\mu_k$ values is also possible.

Once the chunk quality levels $\mu_k$ are known, the calculation of the total MOS quality score can be similar to what was described in an earlier paragraph. It is therefore denoted in a single step 7, denoting the combination of steps 3 and 4 of e.g. Figs. 1b-c.

In a yet another embodiment, requiring more processing power and more storage capability, the association between the requested quality levels for all types of videos and the possible requested bitrates for these videos, can be performed in an initialization step by the video quality module itself, and stored within this module. This embodiment then resembles that of Figs. 1a-c, with the exception that QD0,QD1, resp QD3 will contain an off-line calculation module for all possible values of $\mu_k$, and a storage module for the storage of the association table. Modules QD01,QD11, resp QD31 then will just look-up the associated $\mu_k$ value from the requested bitrate extracted from the HTTP request.

It is to be remarked that the functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific apparatus, it is to be clearly understood that this description is made only by way of example and not as a limitation on the scope of the invention, as defined in the appended claims.

**Claims**

1. Method for assessing the quality ($\mu_{seq}$)of a video stream provided from a server to a client in a client/centric delivery architecture, said method comprising the steps of monitoring successive requests for successive video portions from the client to the server, deriving from the successive requested bitrates extracted from the successive monitored requests a set of successive chunk quality values ($\mu_k$) associated to said successive video portions during a predetermined timing interval (1,...,K), and to further calculate from said successive chunk quality values ($\mu_k$) during said timing interval (1,...,K) a final video quality score ($\mu_{seq}$) value .

2. Method according to claim 1 wherein the calculation of said final video quality score ($\mu_{seq}$) value further depends on at least one audience related parameter ($\alpha,\beta,\gamma,p,$ T).

3. Method according to claim to 2, wherein said at least one audience-related parameter ( T, $\alpha$, $\beta$, $\gamma$, p ) is tuned such that the model used for calculating said final video quality score value ($\mu_{seq}$) maximally correlates with the outcome of subjective experiments earlier obtained during quality assessment measurements of a set of videos by a live audience.

4. Method according to claim 2 wherein said at least one audience-related parameter ( T, $\alpha$, $\beta$, $\gamma$, p ) is tuned by an operator when performing said method.

5. Method according to any of the claims 2-4 wherein said calculation involves a weighted averaging of said successive chunk quality values ($\mu_k$).

6. Method according to claim 5 wherein respective weights are attributed to said successive chunk quality values ($\mu_k$) with the respective weights taking into account at least one of said at least one audience-related parameter earlier obtained during quality assessment measurements of a video with a live audience.

7. Method according to any of the claims 2-4 wherein said calculation involves calculating a p-percentile of said successive chunk quality values ($\mu_k$).

8. Method according to any of the previous claims 1-7 further comprising the steps of providing a set of associated quality profiles to a set of possible requested bitrates for said video stream, to said server, and to incorporate said set of associated quality profiles within a manifest file that describes the formats the client can choose from for said video stream , such that said set of successive chunk quality values ($\mu_k$) is selected from said set of associated quality profiles.

9. Computer program comprising software to perform the steps of the method in accordance to any of the claims 1 to 8.

10. Apparatus comprising means for carrying out the method in accordance to any of the claims 1 to 8.

Fig. 1a

HAS client

manifest
file

retrieve manifest file from server by client

manifest
file copy

HAS
server

http GET request

① 

determination
of $\mu_k$

②

QD11

$\mu_k$

Fig. 1b

③ store successive $\mu_k$ values
for k=1 to K

$\mu_1$ ... $\mu_K$

⓪ audience-related
parameter
(p )

④ MOS
calcuation

$\mu_{seq}$

QD12

MOS quality score

QD1

Fig. 1c

Fig. 2

Fig. 3

Europäisches
Patentamt

European
Patent Office

Office européen
des brevets

# EUROPEAN SEARCH REPORT

Application Number

EP 12 30 6065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAF HUYSEGEMS ET AL: "Session reconstruction for HTTP adaptive streaming: Laying the foundation for network-based QoE monitoring", QUALITY OF SERVICE (IWQOS), 2012 IEEE 20TH INTERNATIONAL WORKSHOP ON, IEEE, 4 June 2012 (2012-06-04), pages 1-9, XP032207367, DOI: 10.1109/IWQOS.2012.6245987 ISBN: 978-1-4673-1296-7 | 1,2,7-10 | INV. H04N17/00 H04N21/442 H04N21/6377 H04N21/845 |
| Y | * page 1, left-hand column, line 1 - page 4, left-hand column, line 52 * ----- | 3-6 | |
| Y | EP 2 400 758 A1 (ALCATEL LUCENT [FR]) 28 December 2011 (2011-12-28) * paragraph [0035] - paragraph [0049] * ----- | 3-6 | |
| A | RICKY K P MOK ET AL: "Measuring the quality of experience of HTTP video streaming", INTEGRATED NETWORK MANAGEMENT (IM), 2011 IFIP/IEEE INTERNATIONAL SYMPOSIUM ON, IEEE, 23 May 2011 (2011-05-23), pages 485-492, XP032035384, DOI: 10.1109/INM.2011.5990550 ISBN: 978-1-4244-9219-0 * the whole document * ----- | 1-10 | TECHNICAL FIELDS SEARCHED (IPC) H04N |
| A | OZGUR OYMAN ET AL: "Quality of experience for HTTP adaptive streaming services", IEEE COMMUNICATIONS MAGAZINE, IEEE SERVICE CENTER, PISCATAWAY, US, vol. 50, no. 4, 1 April 2012 (2012-04-01), pages 20-27, XP011440704, ISSN: 0163-6804, DOI: 10.1109/MCOM.2012.6178830 * page 3 - page 4 * ----- | 1-10 | |

The present search report has been drawn up for all claims

| Place of search | Date of completion of the search | Examiner |
|---|---|---|
| Munich | 11 January 2013 | Berthelé, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 30 6065

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2013

| Patent document cited in search report | | Publication date | Patent family member(s) | Publication date |
|---|---|---|---|---|
| EP 2400758 | A1 | 28-12-2011 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090089445 A

**Non-patent literature cited in the description**

- **O. VERSCHEURE.** User-Oriented QoS Analysis in MPEG-2 Video Delivery. *Journal of Real-Time Imaging,* October 1999, vol. 5 (5), 305-314